# FASCICULE DE BREVET EUROPEEN

(11) **EP 1 098 493 B1**
(45) Date de publication et mention de la délivrance du brevet: **11.01.2006**
(21) Numéro de dépôt: 99811018.3
(22) Date de dépôt: 06.11.1999
(51) Int. Cl.: H04L 29/06

(54) **Procédé de téléservices et serveur adapté**
Verfahren und geeigneter Server für Ferndienste
Method and suitable server for teleservices

(43) Date de publication de la demande: 09.05.2001
(73) Titulaire: Swisscom Fixnet AG, 3050 Bern (CH)
(72) Inventeur: Van Kommer, Robert M., 1752 Villars-sur Glâne (CH)
(74) Mandataire: P&TS Patents & Technology Surveys SA

(56) Documents cités:
- US-A- 5 897 616
- US-A- 5 933 498

## Description

La présente invention concerne un procédé de téléservices permettant à un serveur d'adapter son comportement en fonction de l'utilisateur.

Des systèmes de téléservices en tant que tels sont déjà connus. De tels services utilisent de manière générale un serveur géré par un prestataire de service et auquel une pluralité d'usagers peuvent accéder au travers d'un réseau de télécommunications. Un usager souhaitant utiliser un téléservice, par exemple un téléservice proposé par un institut financier ou par un courtier en information, établit généralement de sa propre initiative une connexion avec un tel serveur au travers d'un réseau de télécommunications commuté, par exemple au travers d'un réseau PSTN, ISDN ou GSM, ou au travers d'un réseau par paquets, par exemple Internet. La connexion peut par exemple être établie par sélection du numéro de téléphone ou de l'URL du serveur, ou de manière automatique lors de la connexion au réseau (serveur choisi comme site d'accueil, ou portail). Un échange de répliques, par exemple de répliques vocales, a ensuite lieu qui permet à l'utilisateur d'indiquer les services qu'il souhaite utiliser. On connaît par exemple des serveurs vocaux interactifs (IVR) comprenant un système d'analyse et de synthèse vocale permettant d'échanger un veritable dialogue vocal avec l'utilisateur. Il existe également, notamment dans l'environnement Internet, WAP (Wireless Application Protocol) ou UMTS, des systèmes de téléservices dans lesquelles la communication entre le serveur et les utilisateurs implique un flux bidirectionnel d'images animées.

Un but de la présente invention est de proposer un procédé et un système de téléservices amélioré, notamment un système de téléservices dans lequel le serveur du prestataire de service adapte son comportement et notamment ses répliques en fonction de l'utilisateur.

Dans les relations commerciales habituelles, un vendeur adapte généralement son langage et son offre en fonction du type de client, notamment en fonction de l'âge présumé du client, qui est évalué sur la base de l'apparence visuelle du client et/ou de sa voix. Par exemple, un vendeur de voitures interpellera probablement de façon différente un enfant, une jeune femme ou un homme d'affaires plus âgé qui pénètre dans son garage ou qui lui téléphone - cela sans que le client potentiel ne doive fournir lui-même d'indications quant à son âge, son sexe ou son statut social.

Un autre but de la présente invention est donc de proposer un procédé et un système de téléservices dans lequel le serveur du prestataire de service adapte son comportement en fonction du type d'utilisateur, indépendamment du contenu sémantique des répliques, par exemple des requêtes vocales ou des images, envoyées par l'utilisateur.

Selon l'invention, ces buts sont atteints au moyen d'un procédé, respectivement d'un serveur, présentant les caractéristiques des revendications indépendantes de type correspondant. Des variantes préférentielles sont par ailleurs indiquées dans les revendications dépendantes.

En particulier, ces buts sont notamment atteints au moyen d'un procédé de téléservices dans lequel le serveur détermine à quelle catégorie d'âge, parmi plusieurs catégories d'âge prédéfinies, appartient l'utilisateur du serveur. La catégorie d'âge est déterminée par analyse de paramètres biométriques de l'utilisateur obtenus dans ledit serveur (4) à partir de la voix extraite de la ou des répliques dudit utilisateur, indépendamment du contenu sémantique de ces répliques. Le comportement du serveur au cours de l'échange de répliques est fonction de la catégorie d'âge à laquelle appartient l'utilisateur.

Cette solution présente l'avantage de permettre la réalisation de serveurs offrant des services, un langage, une offre, etc., adaptés à l'âge de l'utif isateur du système.

Cette solution permet en outre de limiter l'accès à certains téléservices à des utilisateurs appartenant à des classes d'âge prédéterminées, ou de faciliter la navigation à travers un système de menu en dirigeant automatiquement les utilisateurs vers les options susceptibles de les intéresser en fonction de leur âge ou d'autres caractéristiques biométriques.

Il est déjà connu du document US-A-5 897 616 un procédé de téléservice qui procède à l'identification d'utilisateurs. Cependant, les utilisateurs s'identifient eux-mêmes et leur identité est vérifiée au moyen d'un module de classification de voix. Ce document suggère également de déterminer l'âge du locuteur. Toutefois l'âge est déterminé uniquement à partir d'informations connues au préalable et stockées dans une banque de données d'utilisateurs préalablement identifiés. Ce procédé fonctionne donc uniquement si les utilisateurs peuvent être identifiées et si leur âge est connu à priori.

L'invention sera mieux comprise à la lecture de la description donnée à titre d'exemple et illustrée par la figure annexée qui montre de manière schématique un système de téléservices comprenant un serveur selon l'invention.

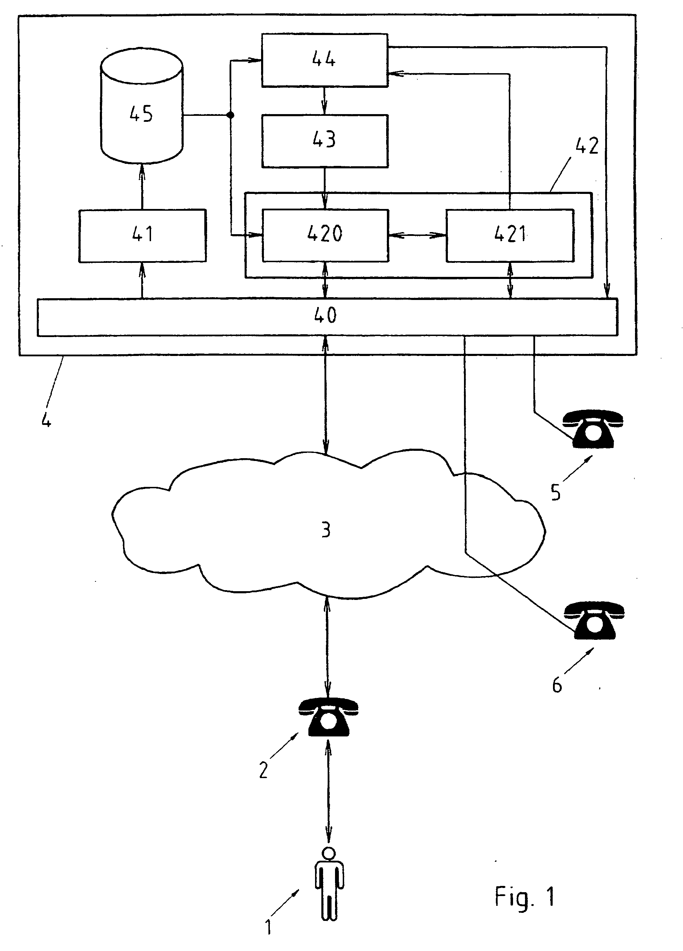

La figure 1 illustre de manière schématique un système comprenant un usager 1 connecté au moyen d'un équipement d'usager 2 à un réseau de télécommunication 3 lui permettant de se connecter notamment à un serveur 4, par exemple un serveur vocal interactif, géré par un prestataire de services, par exemple un institut financier, un courtier en information, un opérateur de télécommunications, etc.. Le réseau de télécommunication 3 est de préférence un réseau téléphonique commuté public ou privé de type fixe, par exemple un réseau RNIS (réseau numérique à intégration de services) ou conventionnel (PSTN, "Public Switched Telecommunication Network), ou de type mobile, par exemple un réseau cellulaire numérique de type GSM (Global System for Mobile Communications), UMTS, etc.. L'invention peut cependant être utilisée avec n'importe quel type de réseau permettant d'établir une communication vocale entre un utilisateur et un serveur, par exemple aussi avec un réseau par paquets, par exemple de type Internet, offrant des applications de téléphonie via Internet, ou un réseau de communication par lignes d'alimentation électriques (PLC, Power Line Communication), l'invention n'étant toutefois pas limitée à ces exemples particuliers.

L'équipement d'usager 2 peut être constitué par n'importe quel type de combiné fixe ou mobile, par exemple par un téléphone fixe ou un téléphone mobile muni d'une carte d'identification d'abonné, par exemple une carte SIM (Subscriber Identification Module) ou WIM (WAP identification Module). L'équipement d'usager 2 pourrait toutefois aussi être constitué par un ordinateur personnel muni d'un microphone et/ou d'une caméra, notamment dans le cas d'une application dans un réseau Internet 3. Dans ce cas, les répliques de l'utilisateur pourront être transmise au serveur vocal 4 soit au moyen d'une application de type voix par Internet ("voice over IP"), soit comme fichier de données, par exemple au format .wav.

Le serveur vocal interactif 4 peut être administré par l'opérateur du réseau téléphonique 3 ou par un prestataire de service, par exemple une banque, une agence de location, un courtier en informations, etc.. il comprend de préférence une zone de mémoire, par exemple une banque de données 45, dans laquelle un profil d'utilisateur est mémorisé pour chaque usager du serveur vocal interactif. Le profil de chaque utilisateur peut comporter des modèles de voix et de langage de l'utilisateur, permettant de faciliter la reconnaissance de parole, les préférences de l'utilisateur (langue, méthode d'authentification choisie, données de facturation, numéro de téléphone du raccordement usuel, adresse Internet, etc..), une signature vocale et/ou un mot de passe, etc.., ainsi que d'autres données propres à chaque utilisateur.

Le serveur vocal interactif 4 comporte en outre une interface réseau 40, par exemple un banc de modems ou un routeur, adapté au type du réseau 3, ainsi que de préférence un module d'identification d'appelant 41. L'utilisateur appelant peut être identifié par exemple au moyen du numéro d'appelant lorsque celui-ci est transmis, par exemple à l'aide de la fonction CLI dans un réseau RNIS ou GSM. Dans une variante préférentielle, l'appelant est identifié indépendamment du raccordement utilisé, par exemple au moyen d'une carte d'identification d'appelant (par exemple une carte SIM ou WIM), d'un mot de passe, ou de données biométriques de l'appelant, par exemple par reconnaissance vocale d'appelant, par exemple au moyen d'un réseau de neurones entraîné à cet effet.

Le serveur vocal interactif 4 comporte en outre un système vocal 42 comprenant un module d'analyse et de synthèse vocale 420, apte notamment à analyser les commandes vocales de l'utilisateur 1 et à synthétiser des réponses ou à fournir des informations sous forme vocale. Le module 420 utilise de préférence le profil d'utilisateur mémorisé dans la banque de données 45 pour améliorer la qualité de l'analyse vocale. Le module d'analyse vocale peut être réalisé de n'importe quelle manière connue, par exemple au moyen d'un réseau de neurones ou de modèles de Markov cachés (HMM, Hidden Markov Models).

L'utilisateur 1 peut accéder aux différentes prestations fournies par le serveur vocal interactif 4 au moyen de commandes vocales dictées à travers le réseau téléphonique 2 et analysées par le système d'analyse vocale 420, et/ou au moyen de touches pressées directement sur le clavier de son combiné.

Un programme informatique 43 (application) chargé dans la mémoire du serveur 4 commande le module d'analyse et de synthèse vocale 420 de manière à fournir une réponse adéquate aux requêtes des utilisateurs et à offrir ainsi les téléservices désirés par les utilisateurs, par exemple l'accès au travers d'un système de menu vocaux interactifs à une banque de données non représentée ou la connexion avec un agent interne 5 ou externe 6. Les services proposés par l'application 43 peuvent par exemple être organisés en menus vocaux. L'utilisateur peut se déplacer dans la hiérarchie de menus au moyens de commandes vocales et envoyer des requêtes ou des instructions à l'application 43 pour consulter ou modifier la banque de données sous-jacente ou accéder aux services proposés. L'application proposée, notamment la hiérarchie de menu, peut être de préférence adaptée à chaque utilisateur en fonction d'indications contenues dans le profil d'usager 45 ou d'indications fournies par le système d'analyse vocale 420. Par exemple, un menu plus complet, ou comprenant moins d'étapes intermédiaires, pourra être proposé à un utilisateur signalé comme expérimenté dans la banque de données 45 et/ou dont le module d'analyse vocale 420 décèle des réactions rapides et dépourvues d'hésitations.

Dans le cas d'un serveur Internet 4, notamment d'un serveur World Wide Web, les services proposés peuvent de manière connu être organisés en un ensemble de pages ou de trames hypertexte.

Selon l'invention, le système vocal 42 comprend un module d'analyse biométrique 421 apte à fournir des informations biométriques sur l'usager 1, notamment des informations sur son âge, ainsi qu'un module de classification 44 indiquant à quelle catégorie, parmi une pluralité de catégories prédéfinies pouvant chacune contenir un nombre illimité d'utilisateurs, appartient cet utilisateur.

Le module d'analyse biométrique 421 comprend de préférence un échantilloneur de voix, par exemple un échantilloneur à 8kHz dans le cas d'une application téléphonique, et un module permettant de retirer les segments de silence ou les segments de voix à faible énergie, qui fournissent peu de caractéristiques sur l'utilisateur 1. Un module d'extraction de caractéristiques de voix ("voice features") dans le domaine temporel et/ou spatial fournit ensuite des caractéristiques de voix à un module de décodage spécialement entraîné au cours d'une phase d'apprentissage. L'apprentissage est effectué une fois pour toutes à partir d'une base de données d'entraînement lors de la programmation du module 421, et peut éventuellement être complété lors de l'utilisation du module au moyen d'algorithmes connus. La base de données d'entraînement contient des extraits de voix ou des caractéristiques de voix ("voice features") d'un échantillon d'utilisateurs représentatif des différentes catégories d'utilisateurs 1, ainsi qu'une indication de classification pour chaque utilisateur de l'échantillon.

Le module de décodage lui-même est de préférence réalisé à l'aide d'un réseau de neurones, pouvant par exemple être intégré au réseau de neurones 420 utilisé pour l'analyse vocale, dont un ou plusieurs neurones de sortie fournissent des signaux correspondant aux différentes classifications prédéfinies. Un modèle de Markov caché (HMM) combiné avec un décodeur de Viterbi, ou un système hybride, pourrait toutefois également être utilisé pour déterminer la classification la plus probable correspondant à l'utilisateur.

L'apprentissage ainsi que le décodage utilisent de préférence un processus en deux passes. La première passe est de préférence dépendante du texte et vise à segmenter le signal de parole, de manière à isoler des segments représentatifs à partir desquels le classement peut être déterminé au cours de la seconde passe. Les segments déterminés au cours de la première passe correspondent de préférence à des phonèmes, à des sous-mots ou à des mots. Des procédés indépendants du texte, bien que généralement moins efficaces, peuvent toutefois également être utilisés.

On utilisera de préférence un décodeur comprenant un réseau de neurones à cadence multiple (multirate neuronal network), permettant d'effectuer un décodage sur des trames très longues, par exemple des trames de 300 ms.

Le module d'analyse biométrique 421 est ainsi de préférence apte à déterminer la catégorie à laquelle appartient l'utilisateur 1 sans utiliser d'enregistrements préalables de cet utilisateur, au contraire des systèmes d'identification d'appelants de type connu.

Les catégories pouvant être déterminées par le module d'analyse biométrique 421 et par le module de classification 44 peuvent correspondre par exemple à:
■ Des tranches d'âge. Le module 421 établit par exemple si l'utilisateur est un enfant, c'est-à-dire une personne dont la voix n'a pas mué, ou une personne plus âgée. Selon le type d'applications et la probabilité d'erreur acceptable, le nombre de tranches d'âge et leur largeur peuvent être plus ou moins importants.
■ Au sexe de l'utilisateur (masculin/féminin)
■ A l'humeur de l'utilisateur. Une catégorie particulière peut par exemple être attribuée aux utilisateurs dont la voix trahit un énervement supérieur à la moyenne.
■ etc..

Ces catégories peuvent également être combinées, et l'homme du métier pourra également imaginer d'autres types de catégories d'utilisateurs pouvant être déterminées à partir de caractéristiques biométriques de la voix ou du visage de l'utilisateur 1.

Le module d'analyse biométrique 421 fournit des indications correspondant à la classification attribuée à l'utilisateur 1 au module de classification 44, constitué dans le cas le plus simple par un simple registre. Dans une variante préférentielle de l'invention, le classificateur vérifie à partir de la banque de données 44 la plausibilité de la classification déterminée par le module d'analyse biométrique 421. Par ailleurs, la classification déterminée par le classificateur 44 est de préférence mémorisée dans la banque de données de profil 45 afin de corroborer ou au contraire d'infirmer les résultats du module 421 lors de connexions ultérieures de l'utilisateur 1. La banque de données 45 peut également selon l'application être utilisée pour affiner la catégorie attribuée à l'utilisateur 1, par exemple avec des indications supplémentaires relatives à son adresse, le montant des factures téléphoniques, etc.., permettant de déterminer avec plus de précision possible le segment de clientèle auquel il appartient.

Dans une variante, au moins certaines indications du module d'analyse biométrique 421 peuvent être rendues invalides par les preferences d'utilisateur indiquées dans la banque de données d'usager 45. Cela permet par exemple à un utilisateur expérimenté mais dont la voix est toujours naturellement hésitante d'accéder au menu pour utilisateurs expérimentés en dépit des résultats de l'analyse biométrique.

Dans une variante non représentée, les données contenues dans la banque de données 45 sont utilisées comme composants supplémentaires du vecteur d'entrée du module 421, à côté des composants de voix tirés directement du vecteur de voix reçu de l'utilisateur 1. Cette variante permet notamment d'utiliser les indications contenues dans la banque de données 45 en les pondérant avec les signaux biométriques obtenus lors de la connexion. Ceci permet par exemple de vérifier si l'utilisateur raccordé 1 est bien l'homme d'âge exactement connu désigné dans la banque de données 45 comme l'utilisateur préférentiel du raccordement détecté par le module d'identification d'appelant 41, ou s'il s'agit plutôt d'un de ses enfants dont l'âge ne pourra être déterminé que de manière approximative à partir des caractéristiques biométriques de sa voix. Cette variante permet de renoncer au classificateur 44.

Le classificateur 44, ou le module 421, indique la classification de l'utilisateur 1 à l'application 43 qui fournit les téléservices désirés. L'application 43 adapte ensuite le dialogue avec l'utilisateur 1 en fonction de la ou des catégories détectées. Selon l'invention, au moins une réplique générée par l'application 43 et le synthétiseur vocal 420 est fonction de la catégorie d'âge à laquelle appartient l'utilisateur. Par exemple, les formes de politesse (Monsieur ou Madame, tutoiement ou vouvoiement, etc.) des répliques générées par l'application 43 peuvent être adaptées dès que le module 421 a attribué une classification à l'utilisateur 1.

Dans une variante préférentielle, la hiérarchie de menus proposée à l'utilisateur 1 est adaptée en fonction de la classification, notamment de la classe d'âge, attribuée à cet utilisateur. Par exemple, l'accès à au moins certains services proposés peut être refusé aux utilisateurs de certaines catégories prédéterminées, tandis que certaines offres peuvent être réservées ou proposées en premier lieu aux utilisateurs d'autres catégories. Dans un serveur proposant une offre variée, par exemple un serveur d'achat, l'offre ou sa présentation peut être adaptée à la catégorie de l'utilisateur. Dans un serveur vocal interactif offrant des services de télésexe, l'accès à ces services peut ainsi par exemple être refusé aux utilisateurs mineurs, ou soumis à des conditions particulières, par exemple à l'envoi d'un avertissement par le serveur 4 ou à la requête d'une signature électronique certifiée par une tierce partie (TTP; trusted third party) et attestant de l'âge de l'utilisateur. Dans un serveur Internet, l'accès à certaines pages peut être réservé aux utilisateurs adultes. Dans ce cas, on utilisera de préférence un applet téléchargé dans l'équipement d'usager 2 pour enregistrer un extrait de voix ou une image de l'utilisateur et envoyer cet extrait au serveur 4, par exemple à un servlet dans le serveur 4, vérifiant au moyen du procédé décrit si l'utilisateur appartient à une catégorie pour laquelle l'accès à la page requise est autorisé. La détermination de catégorie d'utilisateur pourrait toutefois également être effectuée dans l'équipement d'usager 2, par exemple au moyen d'un applet ou d'un plug-in intégré au logiciel de navigation.

Le serveur 4 peut être utilisé comme portail d'entrée et de filtrage d'un centre d'appel, pouvant comprendre à la fois des agents virtuels, c'est-à-dire des programmes d'application 43 commandant un synthétiseur vocal 40 pour répondre automatiquement aux requêtes des usagers, et des agents humains pour résoudre des problèmes plus complexes ou pour des utilisateurs peu à l'aise dans le dialogue avecune machine. Dans ce cas, le module d'analyse biométrique 421 peut être utilisé pour filtrer les appels reçus et les diriger vers l'agent approprié.

Les catégories d'utilisateur peuvent dans une variante être assorties d'une probabilité. Par exemple, le module 421 peut indiquer à l'application 1 la probabilité que l'utilisateur 1 soit mineur. L'application 1 peut ensuite adopter un comportement différent selon la probabilité indiquée, et par exemple refuser l'accès à un service lorsque la probabilité est supérieure à un premier seuil élevé et se contenter d'une mise en garde lorsque cette probabilité est comprise entre un seuil inférieur et le premier seuil élevé.

Dans une autre variante, le module d'analyse biométrique peut indiquer un nombre à l'application 43, par exemple un nombre correspondant à l'âge le plus probable de l'utilisateur, plutôt qu'une simple indication d'appartenance à une catégorie d'âge prédéfinie.

A titre d'exemple, les opérations suivantes peuvent être envisagées en fonction de la catégorie de l'appelant déterminée par le module d'analyse biométrique:
- Modification de l'offre proposée par l'application 43.
- Adaptation de la présentation de l'offre, par exemple adaptation des menus vocaux, des formes de politesse, du style de langage, de la langue, de la voix synthétisée; etc..
- Limitation de l'offre pour les utilisateurs de certaines catégories, par exemple pour les mineurs.
- Vérification de l'autorisation d'accès à certaines pages Internet ou WAP.
- Connexion automatique des utilisateurs de certaines catégories avec certains type d'agents. Par exemple, les utilisateurs seniors peuvent être connectés automatiquement avec un agent humain, présumé moins intimidant, tandis que les mineurs pourront être connectés en priorité avec un agent proposant un menu de jeux avec une voix "ludique".
- Déconnexion automatique de certains types d'utilisateurs, par exemple des mineurs dans un service de télésexe ou de location de voitures.
- Messages particuliers, par exemple avertissements pour certains utilisateurs, publicités ciblées, etc., aux utilisateurs de certaines catégories.
- Détermination de la priorité du traitement dans un call center (priorité accordée aux utilisateurs importants, ou à ceux dont la voix traduit un énervement, etc..).

Un exemple de dialogue entre un utilisateur 1, ici un enfant de 10 ans, et un serveur vocal interactif 4 d'un prestataire de service, ici une agence de location de voitures, pourrait prendre la forme suivante:
Serveur 4: Que puis-je pour vous?
Utilisateur 1: Je souhaite louer une voiture
Serveur 4: Quel type de voiture?
Utilisateur 1: Une voiture de marque XY
Serveur 4 (ayant déterminé que l'utilisateur 1 est, avec une probabilité supérieure à un seuil prédéterminé, mineur): Désolé, la location de voitures est réservée aux détenteurs de permis de conduire. Voudrais-tu participer à notre jeu-concours?

Dans le cas d'un système dans lequel le serveur 4 reçoit une image de l'utilisateur 1, le module 421 peut attribuer une catégorie à cet utilisateur en fonction de l'image reçue. Une précision accrue peut être obtenue lorsque les informations tirées de l'image et de la voix de l'utilisateur sont combinée par des techniques de fusion connues.

Par ailleurs, la présente invention concerne aussi un serveur vocal interactif 4 comprenant une mémoire 43 chargée avec le programme informatique d'application, et des moyens de traitement, par exemple un ou plusieurs processeurs, aptes à exécuter ledit programme informatique pour faire exécuter au serveur vocal interactif le procédé décrit ci-dessus, ainsi qu'un support de données informatique pouvant être chargé dans la mémoire interne d'un serveur pour lui faire exécuter ce procédé.

Enfin, la présente invention concerne aussi un serveur Internet 4 comprenant une mémoire dans laquelle sont mémorisées une ou plusieurs pages, et des moyens de vérification d'accès à ces pages au moyen du procédé décrit.

## Revendications

1. Procédé de téléservices comprenant les étapes suivantes:
établissement d'une connexion au travers d'un réseau de télécommunications (3) entre un utilisateur (1) et un serveur (4) d'un prestataire de service, ledit serveur étant accessible depuis une pluralité d'utilisateurs (1),
échange de répliques vocales entre ledit utilisateur (1) et ledit serveur (4) au travers dudit réseau de télécommunications (3), au moins certaines des répliques dudit serveur étant générées par un programme informatique (43),
détermination de la catégorie d'âge, parmi une pluralité de catégories d'âge prédéfinies, à laquelle appartient ledit utilisateur (1),
le comportement dudit serveur (4) au cours dudit échange de répliques étant fonction de ladite catégorie d'âge à laquelle appartient l'utilisateur
**caractérisé en ce que** ladite catégorie d'âge est déterminée par ledit serveur par analyse de paramètres biométriques de l'utilisateur obtenus dans ledit serveur (4) à partir de la voix extraite de la ou des répliques dudit utilisateur, indépendamment du contenu sémantique de ces répliques.

2. Procédé selon la revendication précédente, dans lequel ledit serveur (4) est un serveur Internet, l'accès à certaines pages du serveur étant interdit aux utilisateurs d'au moins une catégorie d'âge prédéfinie.

3. Procédé selon la revendication 1, dans lequel ledit serveur (4) est un serveur vocal interactif, lesdites au moins certaines répliques du serveur étant générées à l'aide d'un synthétiseur vocal (420).

4. Procédé selon l'une des revendications précédentes, dans lequel ladite catégorie d'âge à laquelle appartient ledit utilisateur est déterminée à l'aide d'un réseau de neurones (421).

5. Procédé selon la revendication précédente, **caractérisé en ce que** ladite catégorie d'âge est déterminée à l'aide d'un réseau de neurones (421) au cours d'une opération en deux phases, la première phase étant une phase de segmentation des échantillons de parole, la seconde phase une phase de décodage en fonction des segments déterminés.

6. Procédé selon l'une des revendications 4 ou 5, **caractérisé en ce que** ladite catégorie d'âge est déterminée à l'aide d'un réseau de neurones à cadence multiple.

7. Procédé selon la revendication précédente, dans lequel ledit réseau de neurones a été entraîné au moyen d'un échantillon d'utilisateurs représentatif des utilisateurs (1) dudit serveur.

8. Procédé selon la revendication 3, dans lequel ladite catégorie d'âge à laquelle appartient ledit utilisateur est déterminée à l'aide d'un modèle de Markov caché combiné avec un décodeur de Viterbi.

9. Procédé selon l'une des revendications précédentes, comprenant une étape d'identification d'appelant et de vérification dans une banque de données (45) du profil lié à l'utilisateur appelant (1), ledit profil permettant de confirmer ou d'infirmer la catégorie attribuée audit utilisateur (1).

10. Procédé selon l'une des revendications précédentes, dans lequel ledit serveur détermine en outre le sexe de l'utilisateur (1) par analyse de paramètres biométriques de l'utilisateur effectuées lors dudit échange de réplique, indépendamment du contenu sémantique de ces répliques, et en ce que le comportement dudit serveur au cours dudit échange de répliques est fonction du sexe de l'utilisateur.

11. Procédé selon l'une des revendications précédentes, dans lequel ledit serveur détermine en outre la catégorie d'humeur de l'utilisateur (1) par analyse de paramètres biométriques de l'utilisateur effectuées lors dudit échange de réplique, indépendamment du contenu sémantique de ces répliques,
et en ce que le comportement dudit serveur au cours dudit échange de répliques est fonction de ladite catégorie d'humeur à laquelle appartient l'utilisateur.

12. Procédé selon l'une des revendications précédentes, dans lequel au moins une réplique générée par ledit serveur (4) est fonction d'au moins une desdites catégories à laquelle appartient l'utilisateur (1).

13. Procédé selon la revendication précédente, dans lequel les formes de politesse adoptées par ledit serveur (4) sont fonction d'au moins une desdites catégories à laquelle appartient l'utilisateur.

14. Procédé selon l'une des revendications précédentes, dans lequel l'accès à au moins certains services offerts par ledit serveur (4) est refusé aux utilisateurs (1) appartenant à certaines desdites catégories prédéterminées.

15. Procédé selon la revendication précédente, dans lequel l'accès à au moins certaines services offerts par ledit serveur est refusé aux utilisateurs (1) appartenant à une catégorie d'âge prédéterminée.

16. Procédé selon l'une des revendications précédentes, dans lequel l'accès à au moins services offerts par ledit serveur (4) pour les utilisateurs de certaines desdites catégories prédéterminées est soumis à des conditions supplémentaires.

17. Procédé selon l'une des revendications précédentes, dans lequel l'offre mise à disposition par ledit serveur (4) est fonction de ladite catégorie à laquelle appartient l'utilisateur (1).

18. Procédé selon l'une des revendications précédentes, dans lequel ledit serveur (4) interrompt ladite connexion lorsque l'utilisateur (1) appartient à certaines desdites catégories prédéterminées.

19. Procédé selon l'une des revendications précédentes, dans lequel ledit utilisateur (1) est automatiquement connecté avec un agent prédéterminé (5, 6) lorsque ledit serveur (4) détermine qu'il appartient à une ou à l'une desdites catégories prédéterminées.

20. Procédé selon la revendication précédente, dans lequel ledit utilisateur (1) est connecté avec un agent humain lorsque ledit serveur (4) détermine qu'il appartient à certaines desdites catégories prédéterminées, le procédé permettant ainsi de filtrer les appels vers cet agent.

21. Serveur vocal interactif (4) comprenant les éléments suivants:
une interface (40) permettant de le connecter à un utilisateur au travers d'un réseau de télécommunication (3),
une mémoire (43) contenant un programme informatique,
un module d'analyse biométrique (421) pour déterminer la tranche d'âge à laquelle appartient l'utilisateur par analyse de paramètres biométriques obtenus à partir de la voix dudit utilisateur.

22. Serveur selon la revendication précédente, comprenant en outre un réseau neuronal (421) apte à déterminer en fonction de paramètres biométriques à quelle catégorie d'âge appartient ledit utilisateur.

23. Serveur vocal selon la revendication précédente, comprenant en outre des moyens d'identification d'appelant (41) ainsi qu'une banque de données (45) de profil d'appelants.

24. Serveur vocal selon l'une des revendications 21 à 23, constitué par un serveur Internet (4) et comprenant des moyens pour limiter l'accès à certaines pages du serveur aux utilisateurs (1) appartenant à une catégorie d'âge prédéterminée.

25. Support de données informatique pour stocker un programme informatique pouvant être chargé dans la mémoire interne d'un serveur de télécommunications ledit programme, lorsqu'il est mis en oeuvre dans ledit serveur, lui fait exécuter toutes les étapes du procédé selon l'une des revendications 1 à 21.

## Patentansprüche

1. Ferndienstverfahren mit den folgenden Schritten:
Erstellen einer Verbindung durch ein Telekommunikationsnetzwerk (3) zwischen einem Benutzer (1) und einem Server (4) eines Dienstanbieters, wobei der besagte Server einer Mehrzahl von Benutzern (1) zugänglich ist,
Austausch von Sprachantworten zwischen dem besagten Benutzer (1) und dem besagten Server (4) über das besagte Telekommunikationsnetzwerk (3), wobei wenigstens gewisse Antworten des besagten Servers von einem Computerprogramm (43) erzeugt werden,
Bestimmen der Alterskategorie, unter einer Vielzahl von vorbestimmten Alterskategorien, zu welcher der besagter Benutzer (1) gehört,
wobei das Verhalten des besagten Servers (4) während dem besagten Antwortenaustausch eine Funktion der besagten Alterskategorie, zu welcher der Benutzer gehört, ist,
**dadurch gekennzeichnet, dass** die besagte Alterskategorie vom besagten Server durch eine Analyse von biometrischen Parametern des Benutzers bestimmt wird, welche im besagten Server (4) auf der Basis der von der Antwort oder den Antworten des besagten Benutzers entnommenen Stimme erhalten wurden, unabhängig vom semantischen Inhalt dieser Antworten.

2. Verfahren gemäss dem vorhergehenden Anspruch, worin der besagte Server (4) ein Internetserver ist, wobei der Zugriff auf gewisse Seiten des Servers für Benutzer von mindestens einer vorbestimmten Alterskategorie gesperrt wird.

3. Verfahren gemäss Anspruch 1, worin der besage Server (4) ein interaktiver Sprachserver ist, wobei mindestens einige Antworten des Servers mittels eines Sprachsynthesizers (420) erzeugt werden.

4. Verfahren gemäss einem der vorhergehenden Ansprüche, worin die besagte Alterskategorie, zu welcher der Benutzer gehört, mittels eines Neuronennetzwerks (421) bestimmt wird.

5. Verfahren gemäss dem vorhergehenden Anspruch, **dadurch gekennzeichnet, dass** die besagte Alterskategorie mittels eines Neuronennetzwerks (421) während einer zweiphasigen Operation bestimmt wird, wobei die erste Phase eine Segmentierung der Sprachmuster und die zweite Phase eine Dekodierungsphase gemäss den bestimmten Segmenten ist.

6. Verfahren gemäss einem der Ansprüche 4 oder 5, **dadurch gekennzeichnet, dass** die besagte Alterskategorie mittels eines Mehrtaktneuronennetzwerks bestimmt wird.

7. Verfahren gemäss dem vorhergehenden Anspruch, worin das besagte Neuronennetzwerk mittels eines Benutzermusters, das repräsentativ für die Benutzer (1) des besagten Servers ist, trainiert wurde.

8. Verfahren gemäss Anspruch 3, worin die besagte Alterskategorie, zu welcher der besagte Benutzer gehört, mittels eines versteckten Markov-Modells in Kombination mit einem Viterbi-Dekodierer bestimmt wird.

9. Verfahren gemäss einem der vorhergehenden Ansprüche, mit einem Schritt der Anruferidentifizierung und Prüfung, in einer Datenbank (45) des mit dem anrufenden Benutzer (1) verknüpften Profils, wobei das besagte Profil es erlaubt, die dem besagten Benutzer (1) zugeordnete Kategorie zu bestätigen oder zurückzuweisen.

10. Verfahren gemäss einem der vorhergehenden Ansprüche, worin der besagte Server ferner das Geschlecht des Benutzers (1) durch eine während dem Antwortenaustausch durchgeführte Analyse von biometrischen Parametern des Benutzers bestimmt, unabhängig vom semantischen Inhalt dieser Antworten,
und das Verhalten des besagten Servers während dem besagten Antwortenaustausch eine Funktion des Geschlechts des Benutzers ist.

11. Verfahren gemäss einem der vorhergehenden Ansprüche, worin der besagte Server ferner die Launekategorie des Benutzers (1) durch eine während dem Antwortenaustausch durchgeführte Analyse von biometrischen Parametern des Benutzers bestimmt, unabhängig vom semantischen Inhalt dieser Antworten,
und das Verhalten des besagten Servers während dem besagten Antwortenaustausch eine Funktion der Launekategorie, zu welcher der Benutzer gehört, ist.

12. Verfahren gemäss einem der vorhergehenden Ansprüche, worin mindestens eine vom besagten Server (4) erzeugte Antwort eine Funktion von mindestens einer der besagten Kategorien, zu welcher der Benutzer (1) gehört, ist.

13. Verfahren gemäss dem vorhergehenden Anspruch, worin die vom besagten Server (4) angenommenen Höflichkeitsformen eine Funktion von mindestens einer der besagten Kategorien, zu welcher der Benutzer (1) gehört, sind.

14. Verfahren gemäss einem der vorhergehenden Ansprüche, worin der Zugriff auf wenigstens gewisse vom besagten Server (4) angebotene Dienstleistungen für Benutzer (1), welche zu gewissen der besagten vorbestimmten Kategorien gehören, verweigert wird.

15. Verfahren gemäss dem vorhergehenden Anspruch, worin der Zugriff auf wenigstens gewisse vom besagten Server angebotene Dienstleistungen für Benutzer (1), welche einer vorbestimmten Alterskategorie gehören, verweigert wird.

16. Verfahren gemäss einem der vorhergehenden Ansprüche, worin der Zugriff auf wenigstens gewisse vom besagten Server (4) angebotene Dienstleistungen für Benutzer von einigen der vorbestimmten Kategorien zusätzlichen Bedingungen unterworfen ist.

17. Verfahren gemäss einem der vorhergehenden Ansprüche, worin das vom besagten Server (4) zur Verfügung gestellte Angebot eine Funktion der besagten Kategorie, zu welcher der Benutzer (1) gehört, ist.

18. Verfahren gemäss einem der vorhergehenden Ansprüche, worin der besagte Server (4) die besagte Verbindung unterbricht, wenn der Benutzer (1) zu einer der besagten vorbestimmten Kategorien gehört.

19. Verfahren gemäss einem der vorhergehenden Ansprüche, worin der besagte Benutzer (1) automatisch mit einem vorbestimmten Agenten (5, 6) verbunden wird, wenn der besagte Server (4) bestimmt hat, dass er zu einer oder mehreren der besagten vorbestimmten Kategorien gehört.

20. Verfahren gemäss einem der vorhergehenden Ansprüche, worin der besagte Benutzer (1) mit einem menschlichen Agenten verbunden wird, wenn der besagte Server (4) bestimmt hat, dass er zu einigen der besagten vorbestimmten Kategorien gehört, wobei das Verfahren somit erlaubt, die Anrufe an diesen Agenten zu filtrieren.

21. Interaktiver Sprachserver (4) mit den folgenden Elementen:
eine Schnittstelle (40) die erlaubt, ihn mit einem Benutzer über ein Telekommunikationsnetzwerk (3) zu verbinden,
einen Speicher (43) mit einem Computerprogramm,
ein Modul für biometrischen Analyse (421) zur Bestimmung der Altersgruppe, zu welcher der Benutzer gehört, durch eine Analyse von biometrischen Parametern, welche von der Stimme des besagten Benutzers entnommen wurden.

22. Server gemäss dem vorhergehenden Anspruch, zusätzlich mit einem neuronalen Netzwerk (421), welches fähig ist, auf der Basis der biometrischen Parameter zu bestimmen, zu welcher Alterskategorie der besagte Benutzer gehört.

23. Sprachserver gemäss dem vorhergehenden Anspruch, zusätzlich mit Anruferidentifizierungsmittel (41) sowie einer Datenbank (45) von Anruferprofilen.

24. Sprachserver gemäss einem der Ansprüche 21 bis 23, bestehend aus einem Internetserver (4) und mit Mittel, um den Zugang auf gewisse Seiten des Servers für Benutzer (1), welche zu einer vorbestimmten Alterskategorie gehören, einzuschränken.

25. Computerdatenträger zum Speichern eines Computerprogramms, welches in den internen Speicher eines Telekommunikationsserver geladen werden kann, wobei das besagte Programm, wenn es im besagten Server ausgeführt wird, alle Schritte des Verfahrens gemäss einem der Ansprüche 1 bis 21 durchführen lässt.

## Claims

1. Method for teleservices including the following steps:
establishing a connection through a telecommunications network (3) between a user (1) and a server (4) of a service provider, said server being accessible by a plurality of users (1),
exchanging voice replies between said user (1) and said server (4) through said telecommunications network (3), at least certain of said server's replies being generated by a computer program (43),
determining the age category, from among a plurality of predefined age categories, to which said user (1) belongs,
the behavior of said server (4) during said exchange of replies being a function of said age category to which the user belongs,
**characterized in that** said age category is determined by said server by analyzing biometric parameters of the user obtained in said server (4) from the voice extracted from the reply or replies of said user, independently of the semantic contents of these replies.

2. Method according to the preceding claim, wherein said server (4) is an Internet server, the access to certain pages of the server being forbidden to users of at least one predefined age category.

3. Method according to claim 1, wherein said server (4) is an interactive voice server, said at least certain replies of the server being generated with the aid of a voice synthesizer (420).

4. Method according to one of the preceding claims, wherein said age category to which said user belongs is determined with the aid of a network of neurons (421).

5. Method according to the preceding claim, **characterized in that** said age category is determined with the aid of a network of neurons (421) during a two-phase operation, the first phase being a phase of segmentation of the voice samples, the second phase being a decoding phase according to the determined segments.

6. Method according to one of the claims 4 or 5, **characterized in that** said age category is determined with the aid of a multiple-rate network of neurons.

7. Method according to the preceding claim, wherein said network of neurons has been trained by means of a sample of users representative of the users (1) of said server.

8. Method according to claim 3, wherein said age category to which said user belongs is determined with the aid of a Hidden Markov Model combined with a Viterbi decoder.

9. Method according to one of the preceding claims, including a step of identifying the caller and checking in a database (45) the profile linked to the calling user (1), said profile allowing the category attributed to said user (1) to be confirmed or infirmed.

10. Method according to one of the preceding claims, wherein said server further determines the gender of the user (1) by analyzing biometric parameters of the user performed during said exchange of replies, independently of the semantic contents of these replies,
and the behavior of said server during said exchange of replies is a function of the user's gender.

11. Method according to one of the preceding claims, wherein said server further determines the mood category of the user (1) by analyzing biometric parameters of the user performed during said exchange of replies, independently of the semantic contents of these replies,
and the behavior of said server during said exchange of replies is a function of the mood category to which said user (1) belongs.

12. Method according to one of the preceding claims, wherein at least one reply generated by said server (4) is a function of at least one of said categories to which said user (1) belongs.

13. Method according to the preceding claim, wherein said politeness forms adopted by said server (4) are a function of at least one of said categories to which the user belongs.

14. Method according to one of the preceding claims, wherein the access to at least certain services offered by said server (4) is refused to users (1) belonging to certain of said predetermined categories.

15. Method according to the preceding claim, wherein the access to at least certain services offered by said server is refused to users (1) belonging to a predetermined age category.

16. Method according to one of the preceding claims, wherein the access to at least certain services offered by said server (4) for the users of certain of said predetermined categories is subjected to additional conditions.

17. Method according to one of the preceding claims, wherein the offer put at the disposal by said server (4) is a function of said category to which the user (1) belongs.

18. Method according to one of the preceding claims, wherein said server (4) interrupts said connection when the user (1) belongs to certain of said predetermined categories.

19. Method according to one of the preceding claims, wherein said user (1) is automatically connected with a predetermined agent (5, 6) when said server (4) determines that he belongs to one or several of said predetermined categories.

20. Method according to the preceding claim, wherein said user (1) is connected with a human agent when said server (4) determines that he belongs to certain of said predetermined categories, the method thus allowing the calls towards this agent to be filtered.

21. Interactive voice server (4) including the following elements:
an interface (40) allowing it to be connected to a user through a telecommunication network (3),
a memory (43) containing a computer program,
a biometric analysis module (421) for determining the age group to which the user belongs by analyzing biometric parameters obtain from the voice of said user.

22. Server according to the preceding claim, further including a neuronal network (421) capable of determining according to biometric parameters to which age category said user belongs.

23. Voice server according to the preceding claim, further including caller identification means (41) as well as a database (45) of caller profiles.

24. Vocal server according to one of the claims 21 to 23, constituted of an Internet server (4) and including means for limiting access to certain pages of the server to users (1) belonging to a predetermined age category.

25. Computer data carrier for storing a computer program capable of being loaded in the internal memory of a telecommunications server, where said program, when it is executed in said server, makes it execute all the steps of the method according to one of the claims 1 to 21.
